# EUROPEAN PATENT APPLICATION

(11) **EP 4 275 881 A1**
(43) Date of publication of application: **15.11.2023**
(21) Application number: 22205790.3
(22) Date of filing: 07.11.2022
(51) Int. Cl.: B32B 5/02, B32B 5/08, B32B 5/18, B32B 5/24, B32B 7/12, B32B 25/10, B32B 25/14, B32B 27/12, B32B 27/30, B32B 27/32, B32B 27/40

(54) **ELASTIC COMPOSITE STRUCTURE CONTAINING A TEXTILE LAYER**

(30) Priority: 11.05.2022 PT 2022117970
(71) Applicant: TMG - Tecidos Plastificados e Outros Revestimentos para a Indústria Automóvel, S.A., 4770-583 São Cosme do Vale (PT)
(72) Inventor: CAMPOS SILVA, Albino, 4770-583 SÃO COSME VALE (PT); LEBRE SANTOS SILVA, Carolina, 4770-583 SÃO COSME VALE (PT); DA SILVA RIBEIRO, Filipe Miguel, 4770-583 SÃO COSME VALE (PT); DA SILVA MAGALHÃES, Maria Julieta, 4770-583 SÃO COSME VALE (PT); CARVALHO DA SILVA, Luis Filipe, 4770-583 SÃO COSME VALE (PT)
(74) Representative: Strehl Schübel-Hopf & Partner

(57) **Abstract**

A composite structure comprising a textile layer and a cover layer, wherein the composite structure is elastic and shows an elongation of at least 20 % at an elongation force of 50 N; a method of preparing the composite structure; and the use of the composite structure as a surface material in the interior of a vehicle.

## Description

### Field of the invention

The present invention relates to elastic composite structures containing an elastic textile layer coated with a cover layer, a method of preparing the composite structure and the use of the composite structure, e.g., as a surface material in the interior of a vehicle.

### Background art

EP 3 533 601 A1 discloses a composite structure comprising a foam layer, a textile layer, and a cover layer containing compact sublayers of thermoplastic polymers. EP 3 592 552 A1 discloses a composite structure comprising a foam layer and a cover layer having a high modulus of elasticity. EP 3 766 687 A1 discloses a composite structure having a very low tensile strength and containing a foam layer and a thermoplastic cover layer. EP 3 960 440 A1 discloses a composite structure comprising an underlayer, a textile layer, and a cover layer in this order, wherein the underlayer and the cover layer are thermally bonded to each other through the textile layer.

### Problem to be solved by the invention

The prior art does not disclose a highly elastic composite structure containing a textile layer. The problem underlying the present invention was to provide an elastic composite structure comprising a textile layer and a polymeric cover layer and showing a high extent of elongation at a low elongation force.

### Summary of the invention

The present invention is defined in the appended claims and covers the following aspects.
[1] A composite structure comprising a textile layer and a cover layer, wherein the composite structure is elastic and shows an elongation of at least 20 % at an elongation force of 50 N in a test according to DIN 53 354.
   [1-1] The composite structure of aspect [1], showing the elongation of at least 20 % both in a first direction and in a second direction perpendicular to the first direction.
   [1-2] The composite structure of aspect [1], showing an elongation of at least 50 % at an elongation force of 100 N, preferably both in a first direction and in a second direction perpendicular to the first direction.
   [1-3] The composite structure of aspect [1], showing a burst load of 250 to 600 N, preferably both in a first direction and in a second direction perpendicular to the first direction.
[2] The composite structure according to any of the preceding aspects, wherein the burst elongation of the composite structure is at least 50 % in a test according to DIN 53 354.
[3] The composite structure according to any of the preceding aspects, wherein the textile layer is elastic and shows an elongation, preferably both in a first direction and in a second direction perpendicular to the first direction, of at least 100 % at an elongation force of 50 N in a test according to DIN 53 354.
   [3-1] The composite structure of aspect [3], wherein the cover layer is elastic.
   [3-2] The composite structure of aspect [3] or [3-1], wherein the textile layer shows an elongation of at least 150 % at an elongation force of 100 N, preferably both in a first direction and in a second direction perpendicular to the first direction.
   [3-3] The composite structure of any of the preceding aspects, wherein the burst load of the textile layer is at least 250 N, preferably both in a first direction and in a second direction perpendicular to the first direction.
   [3-4] The composite structure of any of the preceding aspects, wherein the burst elongation of the textile layer is at least 200 %, preferably both in a first direction and in a second direction perpendicular to the first direction.
   [3-5] A combination of aspects [3], [3-3], and [3-4] is preferred.
   [3-6] A combination of aspects [1], [2], and [3] is preferred.
   [3-7] A combination of aspects [1], [2], and [3-1] is preferred.
   [3-8] A combination of aspects [3-5] and [3-7] is more preferred.
[4] The composite structure according to any of the preceding aspects, wherein the textile layer contains elastic fibers showing an elastic behaviour at an elongation of at least 100 %.
[5] The composite structure according to aspect [4], wherein the elastic fibers are selected from the group consisting of polyurethane fibers, polyurea fibers, diene elastomeric fibers, polyether ester elastomer fibers, polyolefin elastomeric fibers, composite elastomer fibers, and rigid elastic fibers or combinations thereof
   [5-1] The composite structure of aspect [5], wherein the elastic fibers are polyurethane fibers.
[6] The composite structure according to aspect [4] or [5] or [5-1], wherein the content of the elastic fibers is at least 10 mass% of the textile layer.
   [6-1] The composite structure of aspect [6], wherein the content of the elastic fibers is 5 to 50 mass%.
   [6-2] The composite structure of aspect [6], wherein the content of the elastic fibers is 15 to 35 mass%.
[7] The composite structure according to any of the preceding aspects, wherein the cover layer is directly bonded to the textile layer.
   [7-1] The composite structure of aspect [7], wherein the cover layer and the textile layer are thermally bonded to each other.
[8] The composite structure according to any of the preceding aspects, wherein the cover layer contains an elastomer.
[9] The composite structure according to any of the preceding aspects, wherein the cover layer contains a thermoplastic or thermoset polymer selected from the group consisting of a polyolefin, a polyurethane, polyvinylchloride, or a combination thereof.
   [9-1] The composite structure of aspect [9], wherein the cover layer contains a thermoplastic elastomer.
   [9-2] A combination of aspects [9-1] and [3-5] is preferred. [9-3] A combination of aspects [9-1] and [3-6] is preferred. [9-4] A combination of aspects [9-1] and [3-7] is preferred.
[10] The composite structure according to any of the preceding aspects, wherein the composite structure contains a compound structure consisting of a part of the textile layer and a part of the cover layer interpenetrating each other.
   [10-1] The composite structure of aspect [10], wherein a part of the textile layer is free of the compound structure and a part of the cover layer is free of the compound structure.
   [10-2] The composite structure of aspect [10] or [10-1], wherein at least 20 %, preferably at least 50 % of the textile layer in its thickness direction is free of the compound structure.
   [10-3] The composite structure of aspect [10], wherein the textile layer is fully penetrated by cover layer material.
[11] The composite structure according to any of the preceding aspects, wherein the composite structure contains a foam layer, the textile layer, and the cover layer in this order, and/or wherein the cover layer contains a foam layer.
[12] The composite structure according to any of the preceding aspects, wherein the textile layer has a thickness of 0.1 to 2.5 mm, and the cover layer has a thickness of 0.05 mm to 1.5 mm.
[13] The composite structure according to any of the preceding aspects, wherein the composite structure is an artificial leather.
[14] A method of preparing a composite structure as described in any of aspects [1] to [13], comprising thermally or thermo-mechanically bonding the cover layer and the textile layer.
[15] The use of a composite structure according to any of aspects [1] to [12] as a surface material in the interior of a vehicle.

### Advantages of the invention

The composite structure combines the advantageous effects of an elastic material and a textile material. The advantageous property of an elastic material is its stretchability, softness, and facilitated processability as well as desired elasticity for the intended use as a coating material. The advantageous property of a textile material is its softness, low weight, and reinforcing effect on the composite structure. Hence, the composite structure combines the desired properties of elasticity, strength, and softness. The desired softness can be achieved without the use of a foam layer.

Thus, the composite structure provides a desired balance of, on the one hand, a facilitated production and, on the other hand, properties in terms of softness and flexibility to achieve good haptics and handling during processing such as cutting and sewing.

### Embodiments of the invention

The composite structure of the present invention is elastic and comprises a textile layer and a cover layer as mandatory components. The composite structure itself is a layer structure, wherein a surface side of the textile layer and a surface side of the cover layer face each other. The surface sides not facing each other form the topside, which is the cover layer surface side, and the underside, which is the textile layer surface side, of the composite structure.

The composite structure shows the elastic properties described herein preferably in lengthwise and transversal direction based on the structure of the textile used in the textile layer. Since these directions may not be identifiable in the final composite structure, the directions are more generally referred to as a first direction and a second direction perpendicular to the first direction.

The cover layer may be coated with a lacquer layer. The underside of the composite structure may contain any additional structure, such as a foam layer or a support layer or any other layer or functional structure.

The composite structure may contain (i) a textile layer and, as a cover layer, a foam layer and a compact layer in this order. The composite structure may contain (ii) a foam layer, a textile layer, and a cover layer in this order. Arrangements (i) and (ii) may be combined.

The textile layer and the cover layer may be bonded to each other by an adhesive to form a structure consisting of the textile layer, the adhesive layer, and the cover layer in this order.

The adhesive may be a polyolefinic adhesive, a polyurethane adhesive, an acrylic adhesive, or a hot melt adhesive based on polyurethane (PUR). The adhesive may be used in a thickness of 40 µm. Such an adhesive may be generally used in the present invention to bond any kinds of layer structures to each other.

The textile layer and the cover layer may be bonded to each other directly, i.e., without the use of an adhesive, to form a structure consisting of the textile layer and the cover layer. This structure may be formed exclusively by thermal bonding, i.e. by using a molten cover layer composition or at least partly molten cover layer. Preferably, the textile layer of the support layer is not melted at the temperature used in the thermal bonding. For instance, polypropylene fibers in the textile layer may partly melt and be thermally bonded. On the other hand, polyester fibers may not melt and may be bonded to the cover layer by thermo-mechanical bonding, i.e., solely be penetration of the molten cover layer material into the textile layer. In the case of a connection of the textile layer and the cover layer exclusively based on thermal bonding, the connection is reversible, and the textile layer and the cover layer can be separated from each other at room temperature or by heating to melt the cover layer at least partly. The connection of the textile layer and the cover layer may be enforced by treating the sheet e.g. with irradiation or electron beams from the downside of the textile layer to form chemical bonds between the textile layer and the cover layer. In that case, the connection between the textile layer and the cover layer is not reversible, i.e., the layers cannot be separated by at least partly melting the cover layer. Thermal bonding of the textile layer and the cover layer may result in fully or only partly interpenetrated layers. Preferably, a full interpenetration is excluded, and both the cover layer and the textile layer have an un-interpenetrated layer part in the thickness direction. As a result, the textile layer is not exposed at the topside (i.e., the cover layer surface) and thus does not affect the appearance of the composite structure, and the textile layer not fully penetrated with the cover layer material is still flexible.

Preferably, the composite structure is suitable for preparing a sewn product obtainable by sewing at least two layers of the composite structure. The sewn product may be prepared by folding the composite structure, placing the undersides together and sewing the two parts of the composite structure in the contact area. For the composite structure to have the desired properties, e.g., easy processability when sewing, the sheet must not be too hard. The Shore A hardness of the composite structure is therefore preferably less than 90 and more preferably less than 50. For suitability for sewing, it is also important that the sheet has a suitable stitch tear-out force, which is preferably at least 40 N according to DIN EN ISO 23910.

The composite structure according to the present invention may be opaque or translucent. Generally, a translucent structure allows the transmittance of more visible light than an opaque structure when light is emitted from the same light source.

The cover layer may be coated with a lacquer layer. The lacquer may be a conventional material. The thickness of the lacquer layer may preferably be 1 to 30 µm, more preferably 3 to 10 µm. The lacquer layer is applied directly on top of the cover layer as a finish of the composite structure and a protection against chemical agents, physical damage such as scratches or abrasion, and UV radiation. The lacquer layer can further reduce the surface adhesion. Conventional lacquers used for artificial leather for the interior of vehicles can be employed, such as a lacquer layer based on a silicone-containing aliphatic polyurethane. The lacquer layer usually consists of one or more, preferably up to four, transparent layers of lacquer. Alternatively, the surface coating may be coloured by adding colour pigments. The lacquer layer is preferably elastic. The elastic properties of the lacquer layer may be adjusted to correspond to the elastic properties of the other components of the composite structure.

In the present invention, the burst load and the burst elongation are measured according to ISO 13934-1, and the elongation is measured according to DIN 53 354. The standards and norms mentioned in the present invention refer to the latest version available at the time this application was filed, unless indicated otherwise.

In the present invention, the terms "comprises," "comprising," "including," and "having," are inclusive and therefore specify the presence of stated features, steps, layers and/or components, but do not preclude the presence or addition of one or more other features, steps, layers, components, and/or groups thereof. The method steps, processes, and operations described herein are not to be construed as necessarily requiring their performance in the particular order discussed or illustrated, unless specifically identified as an order of performance. It is also to be understood that additional steps may be employed.

Whenever it is mentioned in the context of this description that individual compositions or layers are based on or made of a certain material, this should be interpreted as the respective material forming the main constituent of the composition or layer, wherein other constituents may also be present in small quantities. In embodiments, the terms "based on" or "made of" a certain material means a content of more than 50 %, preferably 90 %, and more preferably 95 %.

As used herein, the singular forms "a," "an," and "the" may be intended to include the plural forms as well, unless the context clearly indicates otherwise. For instance, structural elements and components are generally described in the singular form, e.g. "a" component or "containing a" component. Such singular form formulations are meant to include more than one of the indicated component or structural element, unless indicated otherwise.

The term "and/or" includes any and all combinations of one or more of the associated listed items. Percentages (%) of contents of components are percentages by mass (% by mass) unless explicitly indicated otherwise.

### Textile layer

The composite structure contains a textile layer as a support layer. Examples of a textile layer are knitted fabrics, woven textiles, non-woven textiles, glass fiber textiles, spunlace, or a spacer fabric. A knitted fabric is a flexible material made by creating an interlocking bundle of yarns or threads, which are produced by spinning raw fibers into long and twisted lengths. A spacer fabric is a flexible material formed of two surface textile layers held by spacer threads in a defined spacing. The textile layer is not compact and comprises a large volume ratio of hollow spaces that are usually filled with air. The density of the textile layer is preferably 100 to 500 kg/m³.

The textile layer is elastic. Preferably, it shows an elongation of at least 100 % at an elongation force of 50 N. The textile layer may have a thickness of 0.01 to 5 mm, preferably 0.1 to 1.5 mm. The cover layer may be directly bonded to the textile layer, or the cover layer may be bonded to the textile layer through an adhesive layer.

The textile layer contains or consists of elastic fibers. The content of the elastic fibers is preferably at least 10 mass%, more preferably 15 mass% to 35 mass% of the textile layer. Preferably, the elastic fibers show an elastic behaviour at an elongation of at least 100 %, preferably at least 200 %. The elastic fibers may be one or more kinds of fibers selected from the group consisting of polyurethane fibers, polyurea fibers diene elastomeric fibers, polyether ester elastomer fibers, polyolefin elastomeric fibers, composite elastomer fibers, and rigid elastic fibers or a combination thereof. The non-elastic fibers of the textile layer may be one or more kinds of fibers selected from the group consisting of polyester, polypropylene, polyamide, cotton and natural fibers.

The textile layer affects the properties of the composite structure, e.g. tensile strength, resistance to tear, elongation at break, wrinkle formation, and thermoformability. In a preferred embodiment, the properties of the layers are selected such that the composite structure is suitable for being processed by cutting and sewing.

### Cover layer

The composite structure contains a cover layer. The cover layer may have a thickness of 0.05 mm to 1.5 mm.

The cover layer may consist of a single layer or at least two layers. The cover layer consisting of one layer may be compact or foamed. The cover layer containing at least two layers may contain one or more compact layers and/or one or more foam layers. For instance, the cover layer may consist of a foam layer covered with a compact layer made of two sublayers. If the cover layer contains two or more layers, the inner layer, which is the layer being in contact with the textile layer, may be more elastic than the outer layer.

The density of the compact cover layer or a compact sublayer is preferably higher than 800 kg/m³ and more preferably higher than 850 kg/m³. The density of the foam layer or a foam sublayer is preferably lower than 500 kg/m³, more preferably lower than 300 kg/m³. If the cover layer comprises at least two sublayers, these sublayers are preferably directly bonded to each other.

The cover layer preferably shows elastic properties and/or thermoplastic properties, more preferably both elastic and thermoplastic properties. The components of the cover layer for achieving these desired properties will be discussed in the following.

The cover layer may show elastic properties. The elastic cover layer preferably contains or consists of an elastomer. The elastic properties of the cover layer may be adjusted to correspond to the elastic properties of the textile layer. Alternatively, the elastic properties of the cover layer may differ from the elastic properties of the textile layer in at least one aspect. For instance, the textile layer may have a shorter elongation at break than the cover layer in a case where the tear properties of the composite structure are relevant. In addition to the elastomer, the cover layer may contain a thermoplastic or thermoset polymer selected from the group consisting of a polyolefin, a polyurethane, polyvinylchloride, or a combination thereof.

The elastic properties and other physical properties such as the melting point and the softness of the cover layer are determined by its elastomer content. In the present invention, the terms "elastomer" and "rubber" are used synonymously. They denote polymers that show elastic properties and are crosslinked. Their gel content is preferably between 1 % and 50 %, more preferably between 2 % and 50 %, even more preferably between 5 % and 50 %.

The rubber may be selected from the group consisting of natural rubber (NR), nitrile butadiene rubber (NBR), hydrogenated nitrile butadiene rubber (HNBR), carboxylated nitrile rubber (XNBR), butyl rubber (IIR), chlorobutyl rubber (CIIR), bromobutyl rubber (BIIR), polychloroprene (CR), styrene-butadiene rubber (SBR), polybutadiene (BR), ethylene-propylene-diene tripolymer (EPDM), ethylene-propylene rubber (EPR or EPM), silicone rubber, acrylic rubber (ACM), ethylene-vinylacetate copolymer rubber (EVM), polyurethane rubber (PU), and any combination of the above. The rubber can also be a styrene based thermoplastic elastomer (STPE).

In particular, the rubber may be selected from the group comprising ethylene/α-olefin copolymer rubber (EAM) as well as ethylene/α-olefin/diene terpolymer rubber (EADM). Preferably the diene in the ethylene-α-olefin-diene rubber is preferably a nonconjugated diene. Suitable non-conjugated dienes include dicyclopentadiene, alkyldicyclopentadiene, 1 ,4-pentadiene, 1 ,4-hexadiene, 1 ,5-hexadiene, 1 ,4- heptadiene, 2-methyl-1 ,5-hexadiene, cyclooctadiene, 1,4-octadiene, 1 ,7-octadiene, 5-ethylidene-2-norbornene, 5-n-propylidene-2-norbornene, and 5-(2-methyl-2-butenyl)-2- norbornene. In preferred embodiments, the rubber component comprises an ethylene-α-olefin-diene rubber. The ethylene-α-olefin-diene rubber may comprise an α-olefin having 3 to 8 carbon atoms. The α-olefin in an EAM or EADM rubber is preferably propylene; in such a case the rubber is referred to as EP(D)M. Here, EPM may also be referred to as EPR. It is also possible to use a mixture of the rubbers mentioned above. For instance, the rubber consists of EPDM and EPR. In that case, EPDM preferably constitutes at least 80 mass% of the total rubber content in the cover layer.

EPDM is made from ethylene, propylene and a diene comonomer that enables crosslinking via sulphur vulcanization systems. EPDM contains crosslinks and is preferably fully cured, i.e. crosslinked to an extent of at least 98%, most preferably to an extent of 100%. The content of propylene is preferably 45% to 85% by weight. Preferred dienes used in the manufacture of EPDM rubbers are ethylidene norbornene (ENB), dicyclopentadiene (DCPD), and vinyl norbornene (VNB). EPDM may be compounded with fillers such as carbon black and calcium carbonate, and with plasticizers such as paraffinic oils.

EPR (also referred to as "EPM") is a random copolymer of ethylene and propylene. EPR is similar to EPDM but contains no diene units. It is crosslinked using radical methods such as peroxides. EPR of different properties can be obtained by varying the monomer ratios. EPR preferably comprises 40 to 80 mass%, more preferably 40 to 60 mass% of ethylene units. EPR copolymers containing less than about 40 mass% ethylene generally are known to have poor elasticity at low temperatures, and thus may provide compositions that are too rigid and lack the balance of mechanical properties over a wide temperature range needed for most automotive applications. At high levels of ethylene, generally above about 60 mass% ethylene units, separate crystalline ethylene domains may form within the rubber component, and interphase adhesion and miscibility are reduced.

The cover layer may be thermoplastic or contain thermoplastic polymers such as thermoplastic polyolefin (TPO) and/or thermoplastic polyvinyl chloride (PVC). This property allows thermal bonding of the cover layer to the textile layer without the use of an adhesive. The thermoplastic property requires that the overall degree of crosslinking is not too high. The gel content is preferably 0 % to 20 %.

TPO is a polymer produced from alkenes and is a semi-crystalline thermoplastic polymer. Examples of TPO are polyethylene (PE), polypropylene (PP), polymethylpentene (PMP), polyisobutylene (PIB) and polybutylene (PB, polybutene-1). Polyethylene (PE) is defined here as polymers or copolymers whose proportion by weight of ethylene is more than 50 %. Polypropylene (PP) is defined here as polymers or copolymers whose proportion by weight of propylene is more than 50 %. Examples of TPO are blends of polyethylene (PE) and polypropylene (PP). Examples of PE are HDPE, LDPE and LLDPE. HDPE has weakly branched polymer chains and therefore has a high density between 0.94 g/cm³ and 0.97 g/cm³. LDPE is a thermoplastic made from the monomer ethylene and has a high degree of short- and long-chain branching, which means that the chains do not form crystal structures and LDPE confers isotropic properties. This results in a lower tensile strength. LLDPE is a substantially linear polymer and is made by copolymerization of ethylene with longer-chain olefins. Examples of such olefins are 1-butene, 1-hexene, and 1-octene, which result in short branches in the polymer chain. LLDPE contains branches derived from comonomers of not longer than 1-octene, whereas LDPE also contains branches derived from longer comonomers. LLDPE has higher tensile strength than LDPE, and it exhibits higher impact and puncture resistance than LDPE. LLDPE shows toughness, flexibility, and relative transparency. LLDPE is less shear sensitive than LDPE because of its narrower molecular weight distribution and shorter chain branching. LLDPE confers melt strength. The linearity of LLDPE results from the different manufacturing processes of LLDPE and LDPE. In general, LLDPE is produced at lower temperatures and pressures by copolymerization of ethylene and alpha-olefins. LLDPE can be advantageous for securing excellent moldability on the basis of an appropriate elongation and securing rigidity to be broken at a certain level of strength or more.

The thermoplastic polymer may be thermoplastic polyvinyl chloride (PVC). The properties of PVC are adjusted by adding plasticizers. The addition of plasticizers gives the polymer plastic properties such as yielding and softness. Plasticizers include phthalic acid esters, chloroparaffins, adipic acid esters, phosphoric acid esters acetyltributyl citrate and 1.2-cyclohexanedicarboxylic acid diisononyl ester. PVC may contain up to 40 % plasticizers. PVC can be mixed with additives to improve its physical properties, such as toughness and elasticity, and to enhance processability. Examples of such additives are stabilizers and impact modifiers. For example, PVC without plasticiser can have an elongation at break/tensile strength at break of 10 to 50 %, while PVC can have an elongation at break/tensile strength at break of 170 to 400 %, depending on the structure and quantity of plasticiser.

In a preferred embodiment, the cover layer is both elastic and thermoplastic. To achieve these properties, the cover layer preferably contains a thermoplastic elastomer (TPE), which is an elastomer showing thermoplastic behaviour. The term "thermoplastic" denotes polymers or polymer compositions showing thermoplastic properties, in particular thermoreversibility. TPE behaves rubber-elastically in the range of usual service temperatures. TPE is a copolymer or an elastomer alloy, which is, a physical mix of polymers that consists of materials with both thermoplastic and elastomeric properties. The desired properties can be obtained by varying the mixing ratios. Generally, there are the following generic classes of TPEs (designations according to ISO 18064): Styrenic block copolymer (TPS), thermoplastic polyolefin elastomer (TPO), thermoplastic vulcanizate (TPV), thermoplastic polyurethane (TPU), thermoplastic copolyester (TPC), melt processing rubbers, and thermoplastic polyamide (TPA).

The TPE may belong to one generic class or may be a blend of TPEs from two or more classes. Also, the TPE may be selected from one class and may be one kind of TPE of one class or a blend of two or more kinds of TPEs of one class. The content of TPE in the cover layer is preferably at least 50 %. The total content of thermoplastic polymers, i.e., TPE and other thermoplastic polymers, in the cover layer is preferably at least 80 %, more preferably at least 90 %. Preferably, the total content of polymers in the cover layer consists of TPE and other thermoplastic polymers. More preferably, the total content of polymers in the cover layer consists of thermoplastic polymers, i.e., TPE and other thermoplastic polymers such as TPO, and is at least 80 %, most preferably at least 90 %.

The TPE may be a TPV, which combines the characteristics of vulcanized rubber with the processing properties of thermoplastics. The rubber particles are encapsulated in a thermoplastic matrix. The rubber particles are made of the rubber described herein, and the thermoplastic matrix is made of TPO described herein. Examples of blends of rubber with TPO are EPDM with PE and/or PP, blends of EPM with PP and/or PE and ethylene propylene blends, and blends of styrene ethylene butadiene styrene (SEBS) with TPO such as PE and/or PP. A composition may contain elastomers such as EPR or EPDM or SEBS to such an extent and having such a degree of crosslinking that the composition is still thermoplastic. For instance, the resin components may consist of 10-90 parts by weight of the polyolefin resin and correspondingly 90-10 parts by weight of the rubber, preferably 10-80/80-20 parts by weight, and more preferably 30-70/70-30 parts by weight. In the present invention, a TPV based on polypropylene (PP) and EPDM rubber is preferred.

The thermoplastic elastomer may have the shape of particles. The particles are preferably embedded in a matrix of the other polymers present in the layer. The particle size is preferably below 10 µm, more preferably below 1 µm. Preferably, at least 90 % of the particles have a size of less than 10 µm, as determined by scanning electron microscopy (SEM).

The cover layer may contain usual additives such as plasticizers, stabilizers, anti-aging agent (e.g. antioxidants), fillers and pigments (silica, TiO₂, CaCO₃, Mg(OH)₂, carbon black, mica, kaolin, clay, coal dust, lignin, talc, BaSO₄, Al(OH)₃, ZnO, and MgO), flame retardants (e.g. antimony trioxide or zinc hydroxystannate), waxes, colorants, compatibilizers and other auxiliary substances (e.g. viscosity aids, adhesion promoters, etc.). An example of an additive is a UV stabiliser which may be selected from one or more members of the group consisting of benzotriazole or hindered amine light stabilizers.

The cover layer preferably has a grain, which is a three-dimensionally structured surface on the top side covered with lacquer. The grain may be present in the cover layer only or both in the cover layer and the lacquer layer. In that case the sheet structure may be used as an artificial leather. The grain may be introduced by known methods such as embossing or using a release paper having a surface showing a negative of the structure of the desired grain. The depth of the grain is less than the thickness of the cover layer and is preferably 10 to 500 µm, more preferably 50 to 500 µm, still more preferably 50 to 300 µm. The grain can be produced using conventional methods. The grain can be produced as a paper grain. For this purpose, the starting material is coated onto a structured carrier material, e.g. a release paper. Afterwards, the carrier paper is removed and the surface lacquering is applied in several steps by means of gravure printing. Alternatively, the graining or embossing is preferably applied to the artificial leather surface by means of an embossing roller while applying pressure and temperature after the lacquering.

### Foam layer

The composite structure of the present invention may contain a foam layer. In embodiment (i), the foam layer is the cover layer of the composite structure or a sublayer of the cover layer. The composite structure may contain a textile layer and, as cover layers, a foam layer and a compact layer in this order. In embodiment (ii), the foam layer is a layer arranged at the underside to obtain a composite structure having a foam layer, a textile layer, and a cover layer in this order. Embodiments (i) and (ii) may be combined. Herein, the description applies both to a foam layer as (part of) the cover layer and a foam layer as an underside layer, if not stated otherwise.

The foam layer may consist of or contain polyolefin foam, PVC foam, TPE based foams, PUR based foams and/or EVA/EMA foams. Preferably, the foam layer consists of or contains polyolefin foam such as a polypropylene foam (PP foam). Polypropylene (PP) is defined herein as polymers or copolymers whose proportion by weight of propylene is greater than 50 % by weight. The foam layer may have a thickness of 0.5 to 10 mm. Preferably, the thickness of the foam layer is 1.0 to 5.0 mm. The density of the foam layer is preferably in the range from 30 to 300 kg/m³, more preferably 30 to 150 kg/m³ and even more preferably 40 to 100 kg/m³. The higher the density of the foam, the higher is its strength. A measure of the softness of the foam layer is the gel content. The gel content is an indication of the degree of crosslinking of the polymer. The lower the gel content, the softer the foam layer. The foam layer used in the composite structure according to the invention preferably has a gel content of 20 to 80 %, as measured according to ASTM D2765-16.

### Preparation method

The composite structure may be prepared by providing a textile and a cover layer film and forming the composite structure by using an adhesive or by direct bonding, e.g., by thermal bonding or thermo-mechanical bonding. For instance, the composite structure may be prepared by reverse coating using a 2-component polyurethane system, applying it on a release paper and polymerizing it to obtain the cover layer, applying an adhesive layer on the cover layer, and applying the textile layer on the adhesive.

The composite structure of the present invention may be prepared by direct bonding in a method comprising the following steps:
(a) providing a cover layer composition containing a polymer, which is a thermoplastic polymer, preferably a thermoplastic elastomer;
(b) at least partly melting the thermoplastic polymer of the cover layer composition;
(c) forming a laminate of the cover layer composition containing the at least partly molten thermoplastic elastomer and an elastic textile layer, wherein the cover layer composition and the textile layer may interpenetrate each other; and
(d) cooling the cover layer composition to obtain the composite structure.

In step (a), the cover layer composition may be provided (i) in the form of particles such as granules of a cover layer composition or (ii) as a finished film containing the cover layer composition.

In the case of (i), step (b) comprises melting the particles of the cover layer composition, preferably using an extruder. In the case of (ii), step (b) comprises heating the film at least on one side to at least partly melt the cover layer composition contained in the film. The cover layer composition may be selected to have a melting temperature that is lower than the melting temperature of the textile layer. Thus, the molten cover layer composition penetrates the hollow spaces of the textile layer without melting the fibers of the textile layer. In that case, the cover layer and the textile layer can be separated from each other by heating. Alternatively, the cover layer composition may be selected to have a melting temperature that is equal to or higher than the melting temperature of the textile layer. Thus, the molten cover layer composition at least partly melts the fibers of the support layer when penetrating the hollow spaces. In that case, the cover layer and the textile layer are more strongly bonded to each other.

In step (c), the laminate forming is carried out preferably using an extruder. The molten cover layer composition may be extruded and applied onto the textile layer, or the molten cover layer composition may be extruded onto a carrier and the textile layer may be applied onto the cover layer composition. In both cases, the cover layer composition, the textile layer, and the process conditions may be selected such that the cover layer and the textile layer interpenetrate each other to a desired extent. If pressure is applied in forming the laminate, the textile layer is compressed thus enabling an easier and deeper penetration by the molten cover layer composition. As a result, the adhesion between the support layer and the cover layer may be stronger.

### Examples

The following support materials were used:
R1 - Reference Support 1 (PES/CO)
R2 - Reference Support 2 (PES/CO)
R3 - Reference Support 3 (100% PES)
S1 - Support 1 (74%PES/26% Elastane)
S2 - Support 2 (74%PES/26% Elastane + flame retardant)
S3 - Support 3 (59 to 66%PES/34 to 41% Elastane)

Materials R1, R2, and R3 are textiles and do not meet the requirements of the textile layer used in the composite structure of the present invention.

Materials S1, S2, and S3 are textiles and meet the requirements of the textile layer used in the composite structure of the present invention. Elastane is a commercially available elastic material based on polyether-polyurea.

In the following Tables, T means lengthwise, and TR means transversal.

The properties of the textile layers are shown in Table 1.

**Table 1**

| **Characteristic** | | **R1** | **R2** | **R3** | **S1** | **S2** | **S3** |
|---|---|---|---|---|---|---|---|
| Burst Load [N] | T | 485 | 342 | 228 | 500 | 436 | 463 |
| | TR | 30 | 207 | 195 | 448 | 445 | 333 |
| Elongation [%] at 50 N | T | 34 | 27 | 64 | 264 | 236 | 187 |
| | TR | 85 | 69 | 80 | 167 | 193 | 243 |
| Elongation [%] at 100 N | T | 43 | 36 | 79 | 294 | 294 | 238 |
| | TR | 105 | 87 | 97 | 240 | 247 | 330 |
| Burst Elongation [%] | T | 89 | 73 | 125 | 506 | 476 | 404 |
| | TR | 160 | 134 | 147 | 403 | 398 | 478 |

### Example 1

The textile layers were covered with an elastic PVC layer to obtain a composite structure. The properties of the composite structures are shown in Table 2.

**Table 2**

| **Characteristic** | | **Comparative Examples** | | **Examples** | | |
|---|---|---|---|---|---|---|
| | | **R1-PVC** | **R2-PVC** | **S1-PVC** | **S2-PVC** | **S3-PVC** |
| Burst Load [N] | T | 620 | - | 447 | 452 | 328 |
| | TR | 428 | - | - | 497 | 524 |
| Elongation [%] at 50 N | T | - | 8 | 37 | 33 | 37 |
| | TR | - | 19 | - | 40 | 36 |
| Elongation [%] at 100 N | T | - | 16 | 165 | 153 | 152 |
| | TR | - | 52 | - | 111 | 101 |

Samples S1-PVC, S2-PVC, and S3-PVC showed a higher elongation than the reference samples. Samples S1-PVC and S2-PVC show a burst load within the most preferred range of 400 to 600 (T).

### Example 2

The support layers were covered with an elastic polyurethane (PUR) layer to obtain a composite structure. The properties of the composite structures are shown in Table 2.

**Table 3**

| **Characteristic** | | **Comparative Example** | **Examples** | | |
|---|---|---|---|---|---|
| | | **R4-PUR** | **S1-PUR** | **S2-PUR** | **S3-PUR** |
| Burst Load [N] | T | 787 | 413 | 418 | 335 |
| | TR | 793 | - | 475 | 518 |
| Elongation [%] at 50 N | T | 1 | 129 | 176 | 121 |
| | TR | 5 | - | 127 | 91 |
| Elongation [%] at 100 N | T | - | 264 | 283 | 261 |
| | TR | - | - | 218 | 181 |

Material R4 is a clotted fabric.

Samples S1-PUR, S2-PUR, and S3-PUR showed a higher elongation than the reference samples. Samples S1-PUR and S2-PUR show a burst load within the most preferable range of 400 to 600 (T).

## Claims

1. A composite structure comprising a textile layer and a cover layer, wherein the composite structure is elastic and shows an elongation of at least 20 % at an elongation force of 50 N in a test according to DIN 53 354.

2. The composite structure according to claim 1, wherein the burst elongation of the composite structure is at least 50 % in a test according to ISO 13934-1.

3. The composite structure according to any of the preceding claims, wherein the textile layer is elastic and shows an elongation of at least 100 % at an elongation force of 50 N in a test according to DIN 53 354.

4. The composite structure according to any of the preceding claims, wherein the textile layer contains elastic fibers showing an elastic behaviour at an elongation of at least 100 %.

5. The composite structure according to claim 4, wherein the elastic fibers are selected from the group consisting of polyurethane fibers, polyurea fibers, diene elastomeric fibers, polyether ester elastomer fibers, polyolefin elastomeric fibers, composite elastomer fibers, and rigid elastic fibers or combinations thereof.

6. The composite structure according to claim 4 or 5, wherein the content of the elastic fibers is at least 10 mass% of the textile layer.

7. The composite structure according to any of the preceding claims, wherein the cover layer is directly bonded to the textile layer.

8. The composite structure according to any of the preceding claims, wherein the cover layer contains an elastomer.

9. The composite structure according to any of the preceding claims, wherein the cover layer contains a thermoplastic or thermoset polymer selected from the group consisting of a polyolefin, a polyurethane, polyvinylchloride, or a combination thereof.

10. The composite structure according to any of the preceding claims, wherein the composite structure contains a compound structure consisting of a part of the textile layer and a part of the cover layer interpenetrating each other.

11. The composite structure according to any of the preceding claims, wherein the composite structure contains a foam layer, the textile layer, and the cover layer in this order, and/or wherein the cover layer contains a foam layer.

12. The composite structure according to any of the preceding claims, wherein the textile layer has a thickness of 0.1 to 2.5 mm, and the cover layer has a thickness of 0.05 mm to 1.5 mm.

13. The composite structure according to any of the preceding claims, wherein the composite structure is an artificial leather.

14. A method of preparing a composite structure as described in any of claims 1 to 13, comprising thermally or thermo-mechanically bonding the cover layer and the textile layer.

15. The use of a composite structure according to any of claims 1 to 12 as a surface material in the interior of a vehicle.
